# EUROPEAN PATENT SPECIFICATION

(11) **EP 3 268 140 B1**
(45) Date of publication and mention of the grant of the patent: **02.09.2020**
(21) Application number: 16716898.8
(22) Date of filing: 07.03.2016
(51) Int. Cl.: C04B 26/00, C04B 26/02, C04B 111/00, C04B 111/40, C04B 111/50, C04B 111/54, B09B 3/00, B09B 5/00, C04B 18/30, B03B 9/06

(54) **METHOD FOR MANUFACTURING ARTIFICIAL BUILDING MATERIALS FROM MUNICIPAL SOLID WASTE.**
VERFAHREN ZUR HERSTELLUNG VON KÜNSTLICHEN BAUSTOFFEN AUS FESTSTOFF-HAUSMÜLLRESTEN.
PROCÉDÉ PERMETTANT DE FABRIQUER DES MATÉRIAUX DE CONSTRUCTION ARTIFICIELS À PARTIR DE DÉCHETS SOLIDES MUNICIPAUX.

(30) Priority: 10.03.2015 GR 20150100102
(43) Date of publication of application: 17.01.2018
(73) Proprietor: SOUKOS ROBOTICS E.E., 41221 Larisa (GR)
(72) Inventor: SOUKUS, Nikolaos, 41222 Larisa (GR)
(74) Representative: Panagiotidou, Effimia
(86) International application number: PCT/GR2016/000010
(87) International publication number: WO 2016/142722

(56) References cited:
- WO-A1-98/50319
- WO-A2-2011/141757

## Description

### Definition of the technical field

The invention relates to the manufacture of artificial building materials from compressed or not and fully stabilized residue / product obtained using the methods of municipal solid waste treatment.

The main problem for the overall municipal solid waste management is the utilization of residues resulting after recycling (packaging, organics, etc.), and removal of inert materials. The remains are mainly treated product comprising mainly paper, cardboard, wood, leather, textiles, certain types of plastics as well as sometimes organic material (food residues). The common practice is to place them in modern landfills, not allowing their complete management and their reintroduction into the economic cycle (through recycling or useful or harmless form). Documents WO 2011/141757 A2 and WO 98/50319 are disclosing methods for treatment of municipal solid waste.

### Brief presentation of the invention and its advantages

The present invention relates to the manufacture of building materials which is produced from municipal solid waste treatment and contributes to the elimination of the total final volume of waste going into disposal sites (eg, landfills, residue landfills etc.). The resulting product is free of contaminants pathogens, odorless and can be stored for a long time without its properties being altered. The produced artificial building material is lightweight, easily transported and used, and may be produced in various shapes and dimensions. It is suitable for both domestic and industrial use and can take various forms.

The invention relates to a manufacturing method for the production of the building materials (products) below:
- Manufacture of tiles of Puzzle type

This type of tile is easily assembled forming large surfaces. On these tiles photovoltaic elements can be placed in order to be used for the production of electric power.
- Artificial wood boards of large surfaces for multiple uses

Artificial wood boards with particularly good mechanical and natural features combined with low weight, which is why they are used in the manufacture of construction projects of all types as load-bearing and non-load bearing elements. They are globally the main septation material of wooden structures.
- Special manufactures of artificial wood, such as pallets of all types and dimensions.
- Building materials with multiple applications.

The building materials produced have high mechanical strength and flexibility especially when the direction of the structural units coincides with the tensile direction. They also offer thermal insulation and high moisture resistance. These materials do not rot: the thermal and mechanical properties have long been established. Because of the homogeneous cell structure and their singular density, these materials can be cut with high accuracy and very small tolerances.

The applications of the final product, obtained with the method of the present invention are not limited to those mentioned above, but extend to many others, as this product can be used in many industry sectors. In this way, the reuse of Municipal Solid Waste helps to reduce deforestation and save raw materials, since a kind of ecological recycling is performed significantly reducing the amount of waste that ends up in landfills, ridding the environment of a substantial harmful load.

The building materials of the present invention have very high resistance to the passage of time and very long life. They can be produced in different sizes and shapes and their outer surface may be easily painted. Also it is very easy to place them on any form, texture and shape surfaces. Their installation and assembly is easily achieved due to their ergonomic design such as the puzzle-type tile, and in addition they may bear appropriate connecting elements for better placement.

The method described in this invention has the advantage of making the residues resulting from the treatment of waste re-usable and useful for many applications without additional negative impact to the environment, and significantly reduce the volume of waste that ends up in the environment. It must be emphasized that all polyester materials used as adhesives by other methods are both harmful to humans and the environment and their resistance to weather conditions and mainly the sun is not good. There are of course other types of resins that give great strength and are friendlier to humans and the environment, but with significantly greater cost (multiply greater).

The value of the above possibilities is apparent because the economy resulting from the use of residues is too large. The artificial building materials have very low construction costs, installation and maintenance as compared with conventional building materials, and furthermore, their use in the manufacture disconnects the manufacturer of materials with high price variation due to dependency on oil, such as asphalt.

Below there is a brief description of the method's steps applied. The method includes the following steps in brief:
It should be pointed out that in case of residues treatment that constitute final dehydrated and stabilized product from various processing methods, only steps 6 and 7 of the method are followed.
Step 1: Waste feeding to a chain conveyor type redler, equipped with integrated primary shredding system
Step 2: Input in sorter of 1^{st} material separation with outputs for ferrous, nonferrous, soil, stones, glass, equipped with a special device of ecological cleaning filters
Step 3: Input in hot air drying unit, consisting of a rotary treatment cylindrical shell with optional exposure to UV radiation emission
Step 4: Input to a horizontal feeder and dry sieving device (2nd inert materials separation)
Step 5: Mechanical degradation (homogenization) obtaining particles in fibrous form
Step 6: Controlled melting of the material. Exposure to temperatures between 200-300 °C
Step 7: Entering to mold and a final forming-cooling unit

### Presentation of the invention

The method of the present invention is described below through a nonlimiting example:
The method is as follows:

### Step 1: Waste feeding to a chain conveyor type redler, equipped with integrated primary shredding system

Through the chain conveyor type redler with the integrated shredder municipal solid waste is transferred and the first level cutting-crushing takes place.

The chain conveyor is used for the continuous and controlled transfer of large waste amounts. The modular redler-type chain conveyor is of metal structure that allows smooth and controlled waste flow, while the first cutting of the incoming waste is performed through circular toothed blades. The operation of the first cutting (flow normalization) is continuous without having to stop at any stage the movement of the chain conveyors, while the configuration, the position and number of blades (blades - shredders) are shaped according to the dimensions and the power capacity of the chain conveyor, so as to achieve the desired effect.

### Step 2: Input in sorter of 1st material separation with outputs for ferrous, nonferrous, soil, stones, glass, equipped with a special device of ecological cleaning filters

Aiming to enhance the quality of the end product the separation of inorganic materials such as metals (ferrous, non-ferrous), soil, stones and glass is carried out by using a specific material sorter and subsequently channeling them to be recycled.

The aim is to separate the waste of different sizes into two or more size fractions, using one or more separating surfaces (sieves).

Specifically, the incoming waste stream enters a rotating cylinder in which at least three sieves different cross section are adjusted. As the product passes over the surface of the sieves, it is separated according to the granulometry, and collected in special bags which are adapted to the output on the base of the specific sorter.

The sorter is integrated with a filter device for filtration of exhaust air from the suspended solid particles (dust).

### Step 3: Input in hot air drying unit, consisting of a rotary treatment cylindrical shell with optional exposure to UV radiation emission

Next, the drying occurs in order to obtain the desired final moisture content of the waste stream residue, which is rich in organic material using a suitable hot air dryer.

The most suitable drying methods are those using closed drying systems that enable better utilization of the energy used and control of the drying parameters.

The drying chamber can operate as open or closed circle, and has a horizontal rotary drying chamber - of cylindrical cross section. The whole operation is based on the forced air circulation with simultaneous rotation of the central chamber (cylindrical rotary drier).

Optionally after the drying of the material, there is the possibility of exposure to UV radiation aiming to further stabilization and partial disinfection of the material. These devices emit radiation in the distance of 253,7nm but also in the distance of 185nm. The wavelength emission of 253,7nm has proven to be the most efficient wavelength to destroy the bacteria.

### Step 4: Input to a horizontal feeder and dry sieving device (2nd inert materials separation)

Then, the dosing feeding and separation of inorganic materials (inert materials) occurs, the particle size being 0-5mm. This occurs using a dry sieving device and centrifugal separation processes.

Specifically, inside a vertical cylinder of conical bottom, vortices are created and develop centrifugal forces of radial movement and particle collection. Therefore the final separation of the materials flow from inert materials such as soil and glass that may have remained in the feed mixture is achieved so that their treatment is more efficient in the next step.

### Step 5: Mechanical degradation (homogenization) obtaining particles in fibrous form

Thereafter, the waste stream enters the cylindrical chamber-reactor aiming to the mechanical homogenization to prepare the material for the manufacture of building materials.

In particular, homogenization is effected by the rotational movement of a specially designed device with multiple cutting elements of high strength in a specific arrangement and number. Preferably, the mechanism device comprises of a roller with cutting elements placed circumferentially and equally spaced.

The integrated homogenizing mechanism, which rotates during all the operation cycle, ensures thorough mixing of the contents throughout the mass and thus complete treatment.

The homogenization device is firmly mounted on the bottom of the chamber system and achieves complete treatment of all types of waste, regardless moisture content, while it mixes them.

### Step 6: Controlled melting of the material by exposure to temperatures between 200-300 °C

Thermoforming is a technique in which the conversion of the material to be treated is performed in a soft, flexible product through heating, thereby obtaining the formability into different rigid shapes.

For this reason, waste is subjected to temperatures between 200-300 ° C for converting the input current to semi-liquid mass in order to achieve melting of the material at a high temperature which exceeds the melting temperature of the individual materials involved in the process.

Simultaneously takes places the stirring - mixture of the different type of materials, since the thermal decomposition occurs in the entire volume of the plastic parts of waste which make them the main binder substance of the final semi-liquid mass. This step is necessary before the entering to Step 7, because it achieves the preparation of the waste, since all known injection molding machines are designed to manufacture only plastic products and cannot treat successfully the different type of materials of waste such as organic materials and metals residues.

The most common form of the material after thermal treatment of step 6 is in sheet shape.

### Step 7: Entering to a mold and a final forming-cooling unit

After melting, as mentioned in step 6, the material converges and flows into a mold, which is colder than that.

In step 7 a stage of thermoforming applies.

Then, through a hydraulic press controlled pressure is practiced in the mold. The mold's clamping force is equal to the result of the pressure of the melted material in the mold multiplied by the visible section of the mold cavity in the two parts of the separation surface.

The sheet with applying pressure remains stable in the mold until it is rigid. The formed part is then removed from the mold and is separated from the mounting frame. Of course, there are many other variations of the method that follow a completely different thermoforming process. The equipment used may vary from a simple oven until a complex and automated machine.

Through a cyclical process, identical materials are produced from respective portions that are placed in the mold under high pressure. This technique in a mold is used for a wide range of products, with which even materials of high complexity can be made, in a wide variety of sizes and many ways of application.

## Claims

1. Method for manufacturing artificial building materials from municipal solid waste treatment residue which is **characterized by** the following process steps:
Step 1: Waste feeding to a chain conveyor type redler, equipped with integrated primary shredding system
Step 2: Input in sorter of 1^{st} material separation with outputs for ferrous, nonferrous, soil, stones, glass, equipped with a filter device for filtration of exhaust air from the suspended solid particles
Step 3: Drying of the waste stream residue in a hot air drying unit, consisting of a rotary treatment cylindrical shell
Step 4: Input of the waste stream residue to a horizontal feeder and dry sieving device as 2nd materials separation, final separation of the materials flow from inert materials
Step 5: The waste enters to a cylindrical chamber-reactor, equipped with multiple cutting elements, where takes place the conversion of MSW in fibrous form
Step 6: Controlled melting of the material with exposure to temperatures between 200-300 °C
Step 7: Entering to a mold in controlled high pressure and to a final forming-cooling unit.

2. Method of manufacturing artificial building materials, according to claim 1, **characterized by** the fact that for the materials separation, the incoming waste stream enters a rotating cylinder on which at least three sieves of different cross section are placed.

3. Method of manufacturing artificial building materials, according to claim 1 **characterized by** the fact that for the drying-partial dehydration of the residue, a horizontal rotating drying chamber of cylindrical cross section is used, and after the end of the drying, the method includes the possibility of exposure to UV radiation for further stabilization and partial disinfection of the material with transmission in the range of 253,7nm and 185nm.

4. Method for manufacturing artificial building materials, according to claim 1 **characterized by** the fact that for the dosing feeding and separation of the inorganic inert materials, particles of 0-5mm, a device of dry sieving and centrifugal separation is used, where inside a vertical cylinder and conical bottom vortices are created and develop centrifugal forces of radial movement and particle collection.

5. Method for manufacturing artificial building materials, according to claim 1 **characterized by** the fact that the mechanical waste degradation-homogenization is effected by rotational movement of a device with multiple cutting elements of high strength, circumferentially arranged and equally spaced, which is stably positioned at the bottom of the system's chamber.

6. Method for manufacturing artificial building materials, according to claim 1 **characterized by** the fact that, after the completion of steps 1-5, temperatures between 200-300 °C bring about conversion of the incoming stream into semi-liquid mass thus carrying out the melting in high temperature which exceeds the melting temperature of the individual materials involved in the process.

7. Method of manufacturing artificial building materials, according to claim 1 **characterized by** the fact that the material after step 6 is formed by the convergence and flow into an injection mold in controlled high pressure, so that the clamping force is equal to the result of the pressure of the melted material in the mold multiplied by the visible section of the mold cavity in the two parts of the separation surface.

8. Method of manufacturing artificial building materials, according to claim 1, **characterized by** the fact that the building materials produced by this method take the form of Puzzle-type tiles, artificial wood boards of large areas for multiple uses, special constructions from artificial wood such as pallets, benches of any type and dimensions, pots.

9. Method of manufacturing artificial building materials, according to claim 1, **characterized by** the fact that the building materials produced by this method may be of all the desired dimensions, their outer surface may be easily painted and easily placed in various sizes, shape and texture surfaces thanks to the ergonomic design, bearing connecting elements for optimum adjustment.

10. Method of manufacturing artificial building materials, according to claim 1, **characterized by** the fact that steps 6 and 7 of the method can be applied with equal effectiveness to each final dehydrated and stabilized residue or product resulting from already known techniques of municipal solid waste treatment.

## Patentansprüche

1. Verfahren zur Herstellung künstlicher Baustoffe aus Siedlungsabfällen, das durch folgende Verfahrensschritte gekennzeichnet ist:
Schritt 1: Abfallzuführung zu einem Redler-Kettenförderband, das mit einem integrierten Primär-Häckselsystem ausgestattet ist
Schritt 2: Input in den Sortierer der 1. Materialtrennung mit einem Output für Eisen, Nichteisen, Erde, Steine, Glas, wobei der Sortierer ausgestattet ist mit einer Filtervorrichtung zum Filtrieren der Abluft aus den schwebenden festen Partikeln
Schritt 3: Trocknen des Abfallrückstands in einer Heißlufttrocknungseinheit, die aus einer rotierenden zylindrischen Kapselzur weitere Bearbeitung besteht
Schritt 4: Input des Rückstands aus dem Abfallfluss in eine horizontale Zuführung und Trockensiebvorrichtung als 2. Materialtrennung, endgültige Trennung des Materialflusses von inerten Materialien
Schritt 5: Der Abfall gelangt in einen zylindrischen Kammerreaktor, der mit mehreren Schneidelementen ausgestattet ist, wo die Umwandlung des Hausmülls in eine faserige Form stattfindet
Schritt 6: Kontrolliertes Schmelzen des Materials bei Temperaturen von 200 bis 300° C.
Schritt 7: Eingabe in eine Form unter kontrolliertem Hochdruck und in eine endgültige Formierungs-Kühleinheit.

2. Verfahren zur Herstellung künstlicher Baustoffe gemäß Anspruch 1, das **dadurch gekennzeichnet ist, dass** für die Materialtrennung der ankommende Abfallfluss in einen rotierenden Zylinder eintritt, in dem mindestens drei Siebe mit jeweils unterschiedlichem Querschnitt montiert sind.

3. Verfahren zur Herstellung künstlicher Baustoffe gemäß Anspruch 1, das **dadurch gekennzeichnet ist, dass** zur Trocknung bzw. zum teilweisen Dehydrieren des Rückstands eine horizontal rotierende Trocknungskammer mit zylindrischem Querschnitt verwendet wird, sowie dass nach dem Ende des Trocknens das Verfahren die Möglichkeit der Exposition durch UV-Strahlung zur weiteren Stabilisierung und teilweisen Desinfektion des Materials mit einer Transmission im Bereich von 253,7 nm bis 185 nm mit umfasst.

4. Verfahren zur Herstellung künstlicher Baustoffe gemäss Anspruch 1, das dadurch gezeichnet ist, für die Dosierungszufuhr und Trennung der anorganischen inerten Materialien, Partikel von 0 bis 5 mm, bei dem eine Vorrichtung zum Trockensieben und Zentrifugalabtrennung verwendet wird, wobei innerhalb eines Zylinders mit konischem Boden Wirbel generiert werden und sich Zentrifugalkräfte mit radialer Bewegung und Partikelsammlung entwickeln.

5. Verfahren zur Herstellung künstlicher Baustoffe gemäß Anspruch 1, das **dadurch gekennzeichnet ist, dass** die mechanische Zersetzung-Homogenisierung des Abfalls durch Drehbewegung einer Vorrichtung mit mehreren hochfesten, radial in Umlaufrichtung angeordneten und sich in gleichmäßigem Abstand voneinanderbefindlichen Schneidelementen bewirkt wird, einer Vorrichtung die stabil am Boden der Systemkammer positioniert ist.

6. Verfahren zur Herstellung künstlicher Baustoffe gemäß Anspruch 1, das **dadurch gekennzeichnet ist, dass**, nach Abschluss der Schritte 1 bis 5, Temperaturen zwischen 200-300 °C eine Umwandlung des einströmenden Materialflusses in eine halbflüssige Masse bewirken, so dass das Schmelzen bei hoher Temperatur durchgeführt wird, welche die Schmelztemperatur der einzelnen am Prozess beteiligten Materialien überschreitet.

7. Verfahren zur Herstellung künstlicher Baumaterialien gemäß Anspruch 1, das **dadurch gekennzeichnet ist, dass** nach Schritt 6 das Material durch das Zusammenlaufen und das Einfließen unter kontrolliertem Hochdruck in eine Spritzgussform geformt wird, so dass die Anpresskraft gleich dem Ergebnis des Drucks des geschmolzenen Materials in der Form multipliziert mit dem sichtbaren Querschnitt des Formhohlraums in den beiden Teilen der Trennfläche ist.

8. Verfahren zur Herstellung künstlicher Baumaterialien gemäß Anspruch 1, das **dadurch gekennzeichnet ist, dass** die nach diesem Verfahren hergestellten Baumaterialien die Form von Puzzle-Fliesen, Kunstholzbrettern mit großer Fläche für mehrere Verwendungszwecke und spezielle Konstruktionen aus künstlichem Holz haben, wie Paletten, Bänke jeglicher Art und Größe, Töpfe.

9. Verfahren zur Herstellung künstlicher Baumaterialien gemäß Anspruch 1, das **dadurch gekennzeichnet ist, dass** die durch dieses Verfahren hergestellten Baumaterialien alle gewünschten Abmessungen aufweisen können, dass ihre Außenfläche ohne Mühe gestrichen und dass sie leicht in verschiedenen Größen, Formen und Oberflächenstrukturen platziert werden können, indem sie, dank ihres ergonomischen Designs, Verbindungselemente für eine optimale Anpassung darstellen.

10. Verfahren zur Herstellung künstlicher Baumaterialien gemäß Anspruch 1, das **dadurch gekennzeichnet ist, dass** die Schritte 6 und 7 des Verfahrens mit gleicher Wirksamkeit auf jeden endgültigen dehydrierten und stabilisierten Rückstand oder jedes Produkt angewendet werden können, das aus bereits bekannten Techniken der Behandlung fester Siedlungsabfälle resultiert.

## Revendications

1. Procédé permettant de fabriquer des matériaux de construction artificiels à partir de résidus de traitement de déchets solides municipaux, qui est **caractérisé par** les étapes de processus suivantes:
Étape 1: Alimentation des déchets vers un tapis roulant de type convoyeur à chaîne, équipé d'un système de déchiquetage primaire intégré
Étape 2: Entrée dans le trieur de la 1ère séparation des matériaux avec sorties pour les métaux ferreux, non ferreux, les sols, les pierres, le verre, équipé d'un dispositif de filtrage pour la filtration de l'air d'échappement des particules solides en suspension
Étape 3: Séchage des résidus du flux de déchets dans une unité de séchage à air chaud, constituée d'une enveloppe cylindrique de traitement rotatif
Étape 4: entrée du résidu du flux de déchets dans un alimentateur horizontal et un dispositif de tamisage à sec comme deuxième séparation des matériaux, séparation finale du flux de matériaux des matériaux inertes
Étape 5: Les déchets entrent dans une chambre-réacteur cylindrique, équipée de plusieurs éléments de coupe, où a lieu la conversion des déchets ménagers (MSW) en forme fibreuse
Étape 6: Fusion contrôlée du matériau avec exposition à des températures comprises entre 200 et 300 °C
Étape 7: Entrée dans un moule sous haute pression contrôlée et dans une unité de formage et de refroidissement final.

2. Procédé permettant de fabriquer des matériaux de construction artificiels, selon la revendication 1, **caractérisé par le fait que** pour la séparation des matériaux, le flux de déchets arrivant entre dans un cylindre rotatif qui porte au moins trois tamis de section différente.

3. Procédé permettant de fabriquer des matériaux de construction artificiels, selon la revendication 1 **caractérisé par le fait que** pour le séchage-déshydratation partielle du résidu, une chambre de séchage rotative horizontale de section cylindrique est utilisée, et après la fin du séchage, le procédé inclut la possibilité d'exposition au rayonnement UV pour une stabilisation supplémentaire et une désinfection partielle du matériau avec une transmission dans la plage de valeurs de 253,7 nm et 185 nm

4. Procédé permettant de fabriquer des matériaux de construction artificiels, selon la revendication 1 **caractérisé par le fait que** pour l'alimentation par dosage et la séparation des matières inertes inorganiques, des particules de 0 à 5 mm, un dispositif de tamisage à sec et de séparation centrifuge est utilisé, où à l'intérieur d'un cylindre vertical et à fond conique des tourbillons sont créés et développent des forces centrifuges de mouvement radial et de collecte de particules.

5. Procédé permettant de fabriquer des matériaux de construction artificiels, selon la revendication 1, **caractérisé par le fait que** la dégradation mécanique-homogénéisation des déchets est effectuée par le mouvement rotatif d'un dispositif avec plusieurs pièces coupantes de haute résistance, disposées circonférentiellement et également espacées, qui est positionné de manière stable au fond de la chambre du système.

6. Procédé permettant de fabriquer des matériaux de construction artificiels, selon la revendication 1 **caractérisé par le fait qu'**après l'achèvement des étapes 1 à 5, des températures comprises entre 200 et 300 °C provoquent la conversion du flux entrant en masse semi-liquide effectuant ainsi la fusion à haute température qui dépasse la température de fusion des matériaux individuels impliqués dans le processus.

7. Procédé permettant de fabriquer des matériaux de construction artificiels, selon la revendication 1 **caractérisé par le fait que** le matériau après l'étape 6 est formé par la convergence et l'écoulement dans un moule d'injection à haute pression contrôlée, de sorte que la force de serrage est égale au résultat de la pression du matériau fondu dans le moule multipliée par la section visible de la cavité du moule dans les deux parties de la surface de séparation.

8. Procédé permettant de fabriquer des matériaux de construction artificiels, selon la revendication 1, **caractérisé par le fait que** les matériaux de construction produits par ce procédé prennent la forme de carreaux de type Puzzle, de planches de bois artificiel de grandes surfaces à usages multiples, de constructions spéciales en bois artificiel tels que des palettes, des bancs de tout type et de toute dimension, des pots.

9. Procédé permettant de fabriquer des matériaux de construction artificiels, selon la revendication 1, **caractérisé par le fait que** les matériaux de construction produits par ce procédé peuvent avoir toutes les dimensions souhaitées, leur surface extérieure peut être facilement peinte et facilement formée dans différentes tailles, formes et surfaces de texture grâce à la conception ergonomique, portant des éléments de raccordement pour un réglage optimal.

10. Procédé permettant de fabriquer des matériaux de construction artificiels, selon la revendication 1, **caractérisé par le fait que** les étapes 6 et 7 du procédé peuvent être appliquées avec une efficacité égale à chaque résidu ou produit final déshydraté et stabilisé résultant de techniques de traitement de déchets solides municipaux déjà connues.
